## Europäisches Patentamt

## European Patent Office

## Office européen des brevets

(11) Publication number: **0 173 788**
**B1**

(12) **EUROPEAN PATENT SPECIFICATION**

(45) Date of publication of patent specification: **09.05.90**

(21) Application number: **85100724.5**

(22) Date of filing: **24.01.85**

(51) Int. Cl.⁵: **F 16 J 15/32, F 16 J 15/00, F 16 J 15/26, F 16 J 15/40**

(54) Powder sealing device.

(30) Priority: **25.04.84 JP 59792/84**
**25.04.84 JP 59793/84**

(43) Date of publication of application:
**12.03.86 Bulletin 86/11**

(45) Publication of the grant of the patent:
**09.05.90 Bulletin 90/19**

(84) Designated Contracting States:
**BE CH DE FR GB IT LI NL SE**

(56) References cited:
**DE-A-1 914 800**
**GB-A- 861 557**
**GB-A-2 076 480**
**US-A-2 202 908**

(73) Proprietor: **TANKEN SEIKO CORPORATION**
**No. 14-15, Yaguchi, 3-chome Ota-ku**
**Tokyo (JP)**

(72) Inventor: **Nagai, Yataro c/o Tanken Seiko Corp.**
**No. 14-15, Yaguchi, 3-chome**
**Ota-ku Tokyo (JP)**
Inventor: **Matsushita, Mitsuyoshi c/o Tanken Seiko Corp**
**No. 14-15, Yaguchi, 3-chome**
**Ota-ku Tokyo (JP)**

(74) Representative: **Klingseisen, Franz, Dipl.-Ing. et al**
**Dr. F. Zumstein sen. Dr. E. Assmann Dr. R. Koenigsberger Dr. F. Zumstein jun. Dipl.-Ing. F. Klingseisen Bräuhausstrasse 4**
**D-8000 München 2 (DE)**

Courier Press, Leamington Spa, England.

## Description

The invention relates to a powder sealing device according to the preamble of claim 1.

GB—A—861 557 discloses a sealing device for sealing liquid or gas. In this known sealing device a chamber is located between a sealing part surrounding a rotating shaft and the interior of a machine. This chamber is closed to the interior of the machine by a labyrinth seal and connected via a communicating means with the outside of the machine. This chamber is provided to collect oil leaked out from another part of the sealing device.

Powder sealings have been carried out in general by grand packing or segment seal, or incorporation of labyrinth seal or gas purge of $N_2$ into the former two.

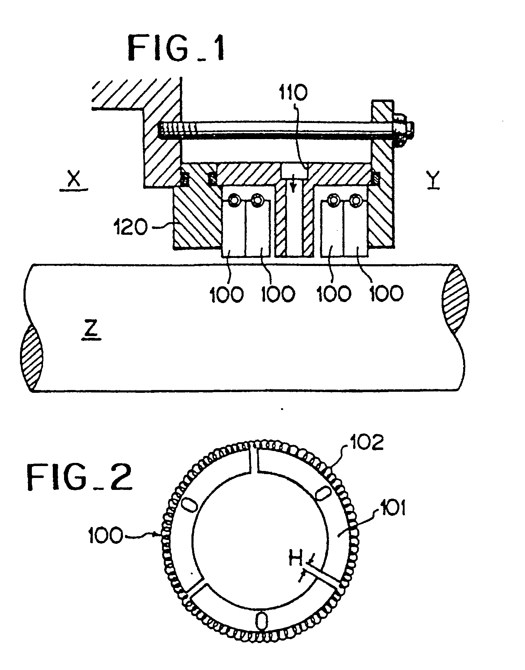

Fig. 1 shows a structure of a segment seal. In the same, (Z) is a shaft, (X) is an inside of a sealing machine and (Y) is an outside of the machine. A reference numeral 100 is segment rings, 110 is an inlet of $N_2$ purge gas, and 120 is a weir.

Unfortunately, in the sealing machines to be used, the powder still leaks in spite of such a structure as mentioned above. For example, in an extrusion machine which forms tips from plastic powders, the powders go into the sealing portions by pressure from a hopper and leak into the atmosphere.

For settling this problem, there is a method to increase the pressure of the purge gas, but in this case the purge gas much flows out from the machine and much flows thereinto, and it is not preferable in view of saving energy. Besides ,in the extrusion machine, a surging phenomenon is caused so that grain sizes of the plastic would be made irregular, and products would be out of order, accordingly.

Further in the segment seal, leakage is caused by structure per se of the segment rings. As is seen in Fig. 2, the segment rings 100 are composed of a plurality of arc segments 101 (three pieces are shown herein), and these segments 101 are combined in ring by pressing toward a core by elasticity of a spring 102 from an outer circumference. The shapes of the segment 101 are various, and known are radial cut ring which is, as shown in Fig. 2, divided radially and defined with spaces H divisions for mounting on the rotation shaft; a tangential cut ring which is divided with an oblique line; and a clearance ring which is divided radially without spaces between divisions and is defined with space in relation with the rotation shaft.

The radial cut ring as shown in Fig. 2 or the tangential cut ring contacts the outer circumference of the shaft, and each of the segments moves toward the core, following abrasion. On the other hand, an inner diameter of the clearance ring is slightly larger than the outer diameter of the shaft to provide a fine space therebetween. In any case, the sealing is effected between the ring and the outer circumference of the shaft. The radial cut ring and the tangential cut ring require uniform and close contact with respect to the outer circumference of the shaft. In the clearance ring, it is important to make the space uniform as possible. Especially, when the gas purge is performed, and if the contact and the space were irregular, the amount of the gas purge would be increased and it is not preferable in curtailment of the energy.

Since each of the segments forming the segment ring has high rigidity toward the radius, and if there would be any difference between a curvature of its inner circumference and a curvature of the outer circumference of the shaft, the close contact between the segment and the shaft would be worsened, or the space would be made uneven.

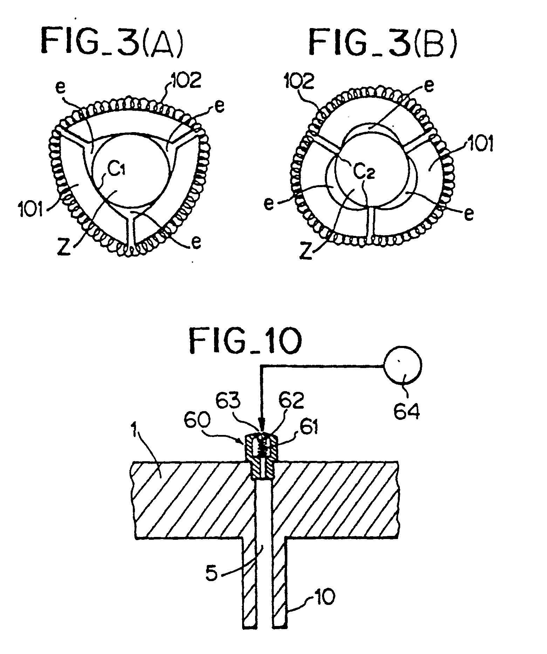

Fig. 3 shows enlargement of the above circumstances with respect to the tangential cut ring. Fig. 3(A) is a case that the curvature of the segment 101 is larger than the curvature of the outer circumference of the shaft, while Fig. 3(B) is a case that the former is smaller than the latter, and spaces (e) appear in the both cases. In Fig. 3(A), the segment contacts the shaft (Z) at a $C_1$ part, and in Fig. 3(B) at a $C_2$ part, and it takes much time for training until other parts contact the shaft. Therefore, only after having much taken time for taming drive or accustoming drive therebetween, it is possible to secure the sealing faculty of the gas purge by the segment seal.

For avoiding said problem, and attention has been conventionally paid to heightening the processing precision of the segment in order to make the curvature of the inner diameter of the segment approximate to the curvature of the outer diameter of the shaft as much as possible, but actually much time and trouble are taken to the processing manufacture therefor. Even if said approximation could be effectuated, spaces would be made by all means due to thermal expansion of the shaft and that of the segment rings.

As another problem involved about the segment seal, the leakage is created by such causes as decrease or stoppage of pressure of the purge air, increase of pressure within the sealing machine, defect or abrasion of the segment ring, bad condition of incorporation or securing of the bolts, and others. In such leakage, the machine must stopped. Especially, if an object to be applied with the seal were a dangerous one, it would cause pollution or calamities, and this fact gives bad influence to reliability of the segment seal.

It is the object of the invention to provide a powder sealing device according to the preamble of claim 1 without causing leakage of powder as a working medium in a machine.

This object is achieved by the features in the characterizing part of claim 1.

The powder sealing device of the invention is furnished with a cushioning chamber within the sealing device, which communicates with the outside of the machine via a communicating means. The powders which are about to leak outside through the sealing part from the inside of the machine, stay in the cushioning chamber and are guided to a desired destination via the communicating means.

Further embodiments of the invention are disclosed in the subclaims.

Each of the segments of the invention which compose the segment seal, is made of a flexible material, and formed with a notch or slit from its outer circumference to the inner side. Due to this notch or slit, the segments may be enlarged or shrinked with respect to the radius so that the contact with the shaft is heightened and the sealing faculty is increased.

Further, the segment seal is defined with a hole for supplying a liquid gasket into a sealing chamber and provided with a cover which normally closes said hole. If the leakage is caused from the segment seal, the liquid gasket is poured into the hole, so that the leakage can be stopped without resting the sealing machine.

The above mentioned three compositions may be used solely or the optional two can be combined, or all the three can be incorporated.

Brief description of the drawings

Fig. 1 is a half cross sectional view of a conventional segment seal;

Fig. 2 is a plan view of the same;

Fig. 3 is explanatory views showing spaces to be made between the segment rings and the shaft;

Fig. 4 is a whole cross sectional view showing one embodiment of the invention;

Figs. 5 to 8 are plan views showing embodiments of the segment rings, respectively;

Fig. 9 is an explanatory view of supplying the liquid gasket; and

Fig. 10 is a partial view showing another embodiment of a cover.

The most preferred embodiment of the invention

A reference will be made to the preferred embodiment of the invention.

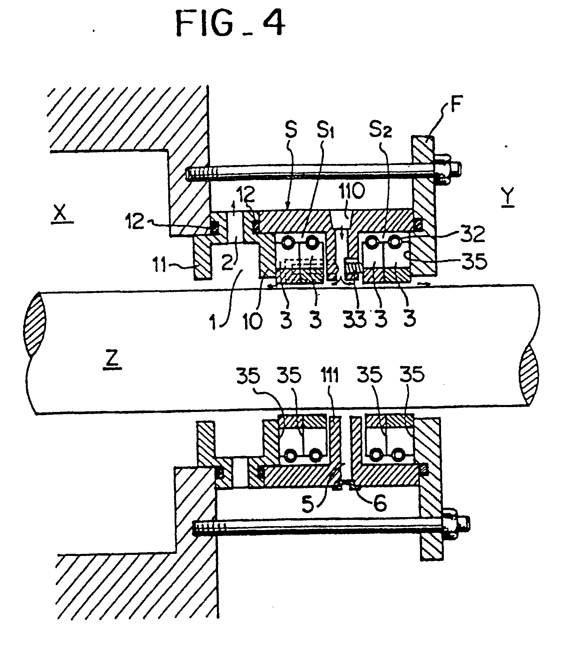

In Fig. 4, (Z) is a rotation shaft, (S) is a sealing part, (X) is an inside of the machine, and (Y) is the atmosphere.

The sealing part (S) is the segment seal in this embodiment and is centrally provided with partitions 111 of ring shape extending inwardly, which form two sealing chambers $S_1$, $S_2$. The sealing chamber may be single or plural. In each of the chambers $S_1$, $S_2$, the segment rings 3 are mounted on the shaft (Z).

The partition 111 is formed with a purge gas inlet 110 at which the air or $N_2$ gas are purged.

The segment rings 3 are composed of a plurality of the segments divided circumferentially which are united by springs 32 and pressed to the inner circumference. The shown example is provided with a couple of the segment rings 3 in each of the chambers $S_1$, $S_2$. There are cases of single segment ring or more segment rings than said plurality. The partition 111 is formed with a plurality of holes, and the segment ring 3 is pressed to the casing by means of multi-springs 33 set in said plurality of the holes.

Stationary seals 35, 35 are provided respectively between the mutual segment rings 3, and the seal flange (F) and a later mentioned weir 10. A fine sliding space is formed in relation with the shaft (Z). Into these sealing chambers $S_1$, $S_2$, the air or gas of higher pressure than that within the machine is purged from the purge gas inlet 110, thereby to perform the sealing against the powder, gas, dust, steam and others within the sealing machine.

A cushioning chamber 1 is provided at the inside (X) of the sealing part (S) in the machine, and is sectioned into the sealing part (S) with the weir 10 and into the inside (X) with the weir 11, and a passage is formed between the lower parts of the weirs 10, 11 and the shaft (Z). The cushioning chamber 1 is formed with a passage 2 which may be communicated with an appropriate position outside of the machine. For example, in the extrusion machine, it may be connected to the uppermost space of a raw material hopper.

In this example, the weirs 10, 11 are formed with rings of one body, and mounted to the casing via O-rings 12.

In the above mentioned structure, the powder under high pressure goes into the cushioning chamber 1 from the inside of the sealing machine by the pressure is made low here, while the purge gas goes into the cushioning chamber 1 from the sealing part (S), and therefore the powder remains there and does not go to the sealing part (S). The powder in the cushioning chamber 1 is exhausted outside of the machine together with the purge gas from the communicating hole 2 and yielded.

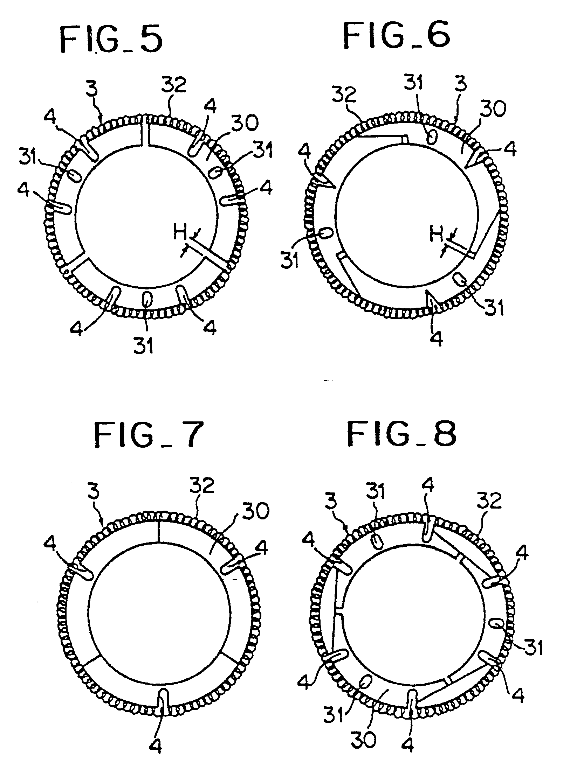

The segment 3 is made of a material having flexibility such as soft or elastic material. Actually, a synthetic resin as PTFE or the like may be assumed, and glass fiber or carbon may be mixed thereinto. Each of the segments 30 of the segment ring 3 is defined with a notch or slit 4. Shapes of the notches 4 are various, for example, U-shape as shown in Fig. 5 or V-shape as in Fig. 6. Mere break is available, and in such a case it is made flexible only in the core direction. As is seen in Fig. 7, an end of a penetrating hole 31 for turn checking is extended till the outer circumference of the segment 30 and it may be made a notch. The larger is the depth of the notch 4, the larger is the flexibility, but if the depth were larger than the lower ends of the seal flange (F) and the weir 10, the leakage would be generated there, and therefore it should be smaller than the latter. The number and the position of the notch 4 is determined in response to its necessity.

Fig. 5 shows the radial cut ring, Fig. 6 shows the tangential cut ring, Fig. 7 shows the clearance ring, and Fig. 8 shows the bridge ring.

In the above mentioned structure, since the segment ring 3 is flexible in the notch 4 toward the radius, and enlarged or shrinked by the force of the spring 32, the closeness to the shaft is more increased. In the clearance ring, the uniformity of the space to the shaft (Z) is made higher. Consequently, the sealing property is increased so that the gas amount may be saved when the gas purge is carried out.

A gasket inlet 5 is defined toward the radius from the outer circumference of the sealing part (S) to the inner circumference of the partition 111, independently of the purge gas inlet 110. The inlet 5 may be single or plural, and may be formed in any position, not limiting to the partition 111.

The upper end of the inlet 5 is slightly larger at which the cover 6 is mounted. The cover 6 in this example is a cap of the synthetic resin secured to said larger upper end with an adhesive. When the liquid gasket is poured, the cap 6 is broken by means of a cartridge gun.

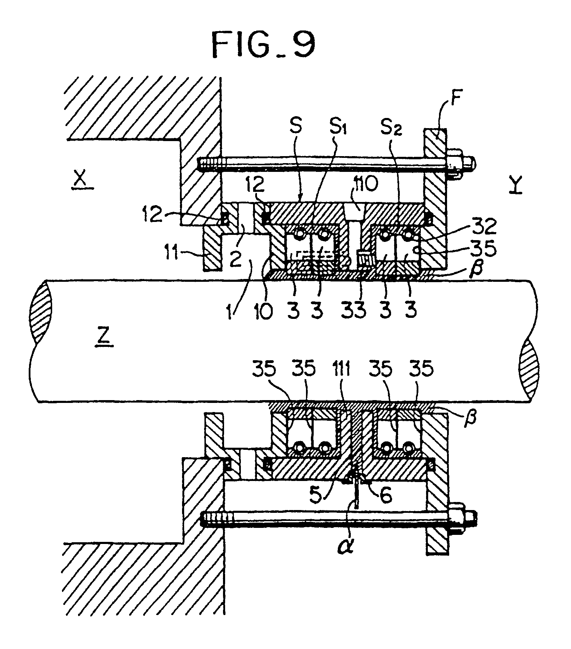

If the leakage were created in this structure, the cover 6 would be, as seen in Fig. 9, broken with a cartridge gun (α) and the liquid gasket (β) is poured into the sealing chambers $S_1$, $S_2$. The liquid gasket (β) penetrates into a space between the divided segment rings, the sealing face (35) between the segment rings 3, 3, and the sealing face 35 in relation with the casing. In addition, it penetrates also into between the casing and the shaft (Z) and between the segment ring 3 and the shaft (Z), but such gasket is changed into a thin film by friction heat due to rotation of the shaft, and is adhered to the inner circumference of the segment ring. Therefore, the rotation of the shaft (Z) is not disturbed, and the sealing chambers $S_1$, $S_2$ and the segment ring 3 form one bush and it displays bushing seal effect with very little clearance to exactly avoid the leakage.

The cover 6 is not limited to the cap of the synthetic resin, but various kinds may be assumed, and such one is sufficient which can exactly close the inlet 5 at the normal time and pour the liquid gasket at the leaking time.

For example, in the embodiment shown in Fig. 10, a cover 60 of a check valve structure (grease nipple) is secured into the hole 5. The cover 60 is provided with a spring 61 and a ball 62, and the ball 62 is pressed to the opening 63 by the spring 61 at the normal time. When the liquid gasket is poured a needle is inserted or the ball is pressed down under the high pressure. Further, it is possible that a source 64 of the liquid gasket is connected to the cover 60 of the check valve structure and at the leaking time the gasket is poured from this part.

The liquid gasket is called as a liquid packing or sealant and it is inherently used at the tightening part. However, the inventors have employed it as filling the sealing chamber and such a using manner has never been practised, and the inventors have firstly known that its use to the segment seal is very effective in prevention of the leakage.

In the liquid gasket, there are non-hardening viscous type, half-hardening viscous type, hardening type and hardening stripable type, and the hardening type is not suited to the segment seal of the present invention.

Furthermore, the liquid gasket is easily removed by the solvent, and when the sealing machine is stopped, the seal is dissolved and if the liquid gasket is removed it may be used as a usual segment seal.

The liquid gasket may be charged into the conventional seal air hole. If a hole is provided for a pressure gauge of the air pressure in the sealing chamber, it may be poured into this hole. However, when this hole is used, the pressure gauge and others should be taken away. If those members are taken away, the gas within the machine or the purge gas is spouted and it is preferable to provide the pouring hole 5 and the cover 6.

## Claims

1. A powder sealing device for providing a seal of a machine which uses a powder material as a working medium, comprising a sealing part (S) which provides a seal around a rotating shaft (Z) of the machine, a chamber (1) located between the sealing part (S) and the interior (X) of the machine, and a communicating means (2) which connects the chamber (1) to the outside of the machine, characterized in that a passage is provided between the interior (X) of the machine and the cushioning chamber (1) for receiving the powder material from the interior of the machine.

2. A powder sealing device as claimed in claim 1, wherein the sealing part (S) is a segment seal.

3. A powder sealing device as claimed in claim 2, having segment rings (3) made of a flexible material, which are defined with notches (4) extending toward an inner circumference from an outer circumference.

4. A powder sealing device as claimed in claims 1 and 2, having sealing chambers ($S_1$, $S_2$) and segment rings (3) mounted on a rotation shaft (Z) in said sealing chamber, wherein a hole (5) is formed for supplying a liquid gasket into said sealing chamber, and a cover (6) is furnished for closing said hole at a normal time.

5. A powder sealing device as claimed in the preceeding claims, having a sealing chamber (S) and segment rings (3) mounted on a rotation shaft (Z) in said sealing chamber, wherein a liquid gasket is filled in said sealing chamber (S) to avoid leakage.

## Patentansprüche

1. Pulverdichtungsvorrichtung zum Vorsehen einer Dichtung einer Maschine, die ein Pulvermaterial als Arbeitsmedium verwendet, mit einem Dichtungsteil (S), der eine Dichtung um eine rotierende Welle (Z) der Maschine vorsieht, einer Kammer (1), die zwischen dem Dichtungsteil (S) und dem Inneren (X) der Maschine angeordnet ist, und einer Verbindungseinrichtung (2), die die Kammer (1) mit der Außenseite der Maschine verbindet, dadurch gekennzeichnet, daß ein Durchlaß zwischen dem Inneren (X) der Maschine und der Pufferkammer (1) zum Aufnehmen des Pulvermaterials vom Inneren der Maschine vorgesehen ist.

2. Pulverdichtungsvorrichtung nach Anspruch 1, bei der der Dichtungsteil (S) eine Segmentdichtung ist.

3. Pulverdichtungsvorrichtung nach Anspruch 2, mit Segmentringen (3) aus einem flexiblen Material, die von Nuten (4) begrenzt sind, die von einem Außenumfang zu einem Innenumfang verlaufen.

4. Pulverdichtungsvorrichtung nach Anspruch 1 und 2, mit Dichtungskammern ($S_1$, $S_2$) und Segmentringen (3), die an einer Drehwelle (Z) in der Dichtungskammer angebracht sind, wobei ein Loch (5) ausgebildet ist, um eine Flüssigkeitsdichtung in die Dichtungskammer zu liefern, und eine Abdeckung (6) vorgesehen ist, um das Loch während der normalen Zeit zu schließen.

5. Pulverdichtungsvorrichtung nach den vorhergehenden Ansprüchen mit einer Dichtungskammer (S) und Segmentringen (3), die an einer Drehwelle (Z) in der Dichtungskammer angebracht sind, wobei eine Flüssigkeitsdichtung in die Dichtungskammer (5) gefüllt ist, um ein Auslaufen zu vermeiden.

## Revendications

1. Dispositif d'étanchéité vis-à-vis d'une poudre, pour constituer un joint d'une machine qui utilise un produit pulvérulent en tant que produit de travail,

comprenant un élément d'étanchéité (S) constituant un joint autour d'un arbre rotatif (Z) de la machine,

une chambre (1) située entre l'élément d'étanchéité (S) et l'intérieur (X) de la machine,

et un moyen de communication (2) qui relie à la chambre (1) avec l'extérieur de la machine,

caractérisé en ce qu'un passage est prévu entre l'intérieur (X) de la machine et la cloison-barrière (1) pour recevoir le produit pulvérulent provenant de l'intérieur de la machine.

2. Dispositif d'étanchéité vis-à-vis d'une poudre selon la revendication 1, dans lequel l'élément d'étanchéité (S) est un joint à segments.

3. Dispositif d'étanchéité vis-à-vis d'une poudre selon la revendication 2, comprenant des joints à segments (3) réalisés en un matériau souple, qui comportent des encoches (4) s'étendant en direction d'une circonférence interne à partir d'une circonférence externe.

4. Dispositif d'étanchéité vis-à-vis d'une poudre selon les revendications 1 et 2, comprenant des chambres d'étanchéité ($S_1$, $S_2$) et des anneaux à segments (3) montés sur un arbre rotatif (Z) dans lesdites chambres d'étanchéité, dispositif dans lequel un trou (5) est constitué pour alimenter une garniture d'étanchéité liquide dans ladite chambre d'étanchéité, et un couvercle (6) est prévu pour fermer ledit trou en temps normal.

5. Dispositif d'étanchéité vis-à-vis d'une poudre selon l'une quelconque des revendications précédentes comprenant une chambre d'étanchéité (S) et des anneaux à segments (3) montés sur un arbre rotatif (Z) dans ladite chambre d'étanchéité, dans lequel une garniture d'étanchéité liquide est introduite dans ladite chambre d'étanchéité (S) pour éviter des fuites.

# FIG_1

110

X

Y

120

100 100 100 100

Z

# FIG_2

102

101

100

H

## FIG_3(A)

## FIG_3(B)

## FIG_10

# FIG_4

# FIG_5

# FIG_6

# FIG_7

# FIG_8

# FIG_9